# EUROPEAN PATENT SPECIFICATION

(11) **EP 0 868 697 B1**
(45) Date of publication and mention of the grant of the patent: **01.06.2005**
(21) Application number: 97940272.4
(22) Date of filing: 25.09.1997
(51) Int. Cl.: G06F 13/42, H04L 7/08, G06F 1/12

(54) **INTERFACE FOR TRANSFERRING DATA BETWEEN TWO CLOCK DOMAINS**
SCHNITTSTELLE ZUR DATENÜBERTRAGUNG ZWISCHEN ZWEI TAKTBEREICHEN
INTERFACE POUR LE TRANSFERT DE DONNEES ENTRE DEUX DOMAINES D'HORLOGES

(30) Priority: 25.09.1996 US 27097 P; 19.08.1997 US 914473
(43) Date of publication of application: 07.10.1998
(73) Proprietor: Koninklijke Philips Electronics N.V., 5621 BA Eindhoven (NL)
(72) Inventor: JACOBS, Eino, NL-5656 AA Eindhoven (NL)
(74) Representative: Hesselmann, Gerardus Johannes Maria
(86) International application number: PCT/IB1997/001151
(87) International publication number: WO 1998/013768

(56) References cited:
- EP-A- 0 666 541
- US-A- 5 487 092

## Description

The present invention relates to a computer system using data transfer between subsystems having different clocks. In computer systems, one subsystem may utilize a first clock while other subsystems may utilize different clocks. These clocks may have different frequency and phase.

Such a system is disclosed in European patent application EP666541 A1. The clocks may be synchronized to each other for example using a phase locked loop. With a phase locked loop any ratio A:B between the frequencies of the clocks may be realized, for example by frequency dividing a first clock signal by A and a second clock signal by B and phase locking the divided signals. A phase lock will ensure a precise ratio between the frequencies of the two clocks. A first underlying cycle of A clock cycles of the first clock will be made just as long as a second underlying cycle of B clock cycles of the second clock. The phase lock will also tend to make the phase of these two underlying cycles equal, so that the first and second underlying cycle would coincide. However, this will generally not exactly be the case: a small but unpredictable phase difference will remain.

The frequency and phase differences between the clocks present problems for data transfer between the subsystems because data transfer is synchronized by a clock and normally requires that the sender and the receiver use the same clock.

It is an object of the invention to provide for a computer system that synchronizes data transfer between subsystems that use different clocks that may differ in phase and frequency.

The invention provides for a computer system according to Claim 1. The registers, together with the read and write circuit provide an interface between the first subsystem and the second subsystem for transferring data between the two subsystems without corruption or loss of the data being transferred. Information is written into the registers using the first clock and read from the registers using the second clock. Between writing and reading there must be a minimum time-interval time to allow the register to capture information before it is read.

To ensure such a minimum time-interval, the invention uses the ability of the synchronization circuit to identify clock cycles of the first and second clocks with a fixed position in the common underlying cycles. Writing into a register is performed with a delay of a fixed number of cycles of the first clock after such an identified clock cycle of the first clock. Similarly, reading from a register is performed with a delay of a fixed number of cycles of the second clock after such an identified period. The delays are chosen so that there is at least one cycle of the first clock between reading and writing of a register in case the underlying cycles of A and B clock periods coincide. Of course, the underlying cycles will not generally coincide, but because of this choice phase differences between these cycles of almost a complete period of the first clock can be tolerated. Thus, transfer of data is done with minimum latency and a minimum number of pipeline registers between the subsystems.

Another object of the invention is to prevent meta stability problems from occurring. A synchronization circuit between two clock domains which does not utilize phase locking suffers from meta stability problems.

Still other objects and advantages of the invention will, in part be obvious and will in part be apparent from the disclosure.

For a fuller understanding of the invention, reference is made to the following description taken in connection with the accompanying drawings, in which:
Figure 1 is a block diagram of a system having two subsystems, each with a respective clock.
Figure 2 is a more detailed block diagram of a system having two subsystems, each with a respective clock, and an interface.
Figure 3 is a first embodiment of the interface of a system having a 3:2 clock ratio.
Figure 4 is a first preferred embodiment of the interface of a system having a 3:2 clock ratio.
Figure 5 is a timing diagram for the first embodiment of the interface for the system having a clock ratio of 3:2.
Figure 6 is a second embodiment of the interface of a system having a 3:2 clock ratio.

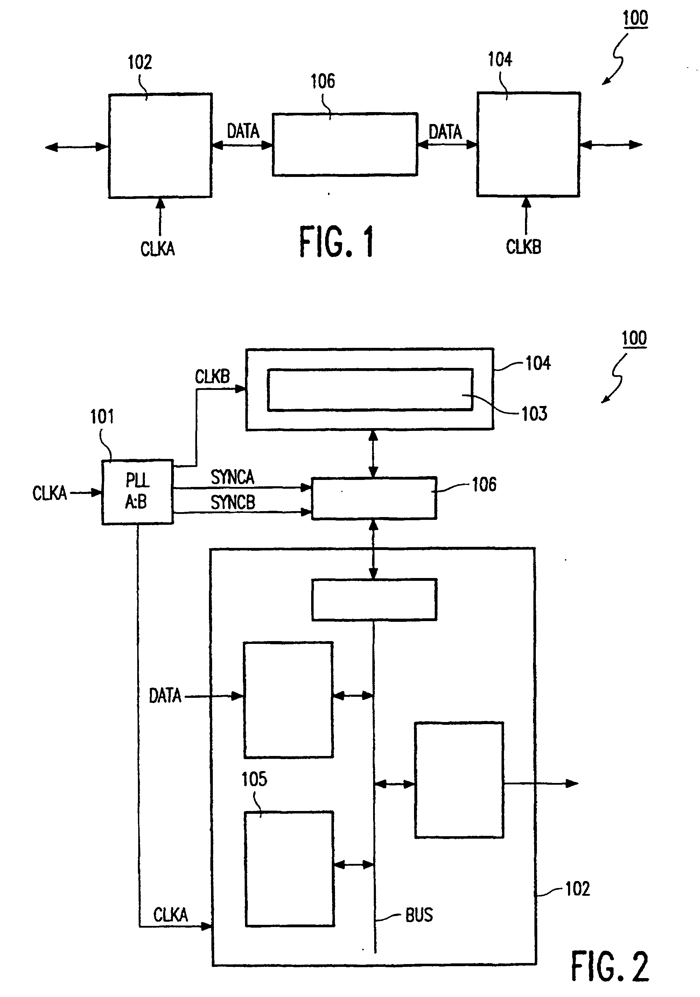

In the system of Figure 1, a first and a second subsystem 102 and 104 exist within a system 100. The first subsystem 102 is clocked by a first clock CLKA and the second subsystem 104 is clocked by a second clock CLKB. The first and second clocks may have different frequencies; however certain clock edges of the first and second clocks have a fixed relationship, i.e., the clocks are synchronized but with a skew which may have a maximum.

Due to the differing clock frequencies and to prevent subsystem 1 from switching data when subsystem 2 tries to sample the data, an interface 106 is provided between subsystems 1 and 2 for transferring data between the two subsystems 102 and 104 without problems such as data loss or corruption.

Figure 2 illustrates a detailed example of an embodiment of the system 100. The first subsystem 102, including a central processing unit (CPU) 105, and the second subsystem 104, including memory 103, exist within the system 100. The synchronizing interface 106 is provided between the CPU subsystem 102 and the memory subsystem 104 to permit transfer of data between these two subsystems. The CPU subsystem 102 is clocked by the first clock CLKA and the memory subsystem 104 is clocked by the second clock CLKB. The fixed relationship between CLKA and CLKB may be achieved, for example, through a PLL (phase locked loop) 101. CLKA is supplied to, in this example, the phase locked loop 101 which supplies CLKB to the memory subsystem 104. Additionally, the PLL 101 supplies two synchronizing signals SYNCA and SYNCB to the synchronizing interface 106. The synchronizing signals indicate when the clock signals CLKA and CLKB are synchronized, i.e. their respective pulses have respective edges aligned with each other in case there is no phase difference between the locked signals.

CLKA and CLKB have a clock ratio of A:B where A is a number of clock cycles in a length of time and B is a number of clock cycles in that same length of time. Accordingly, the length of A clock cycles of the first clock equals the length of B clock cycles of the second clock. Thus, the clocks CLKA and CLKB are synchronized, but with a possible skew. The skew may have a maximum value as determined by an accuracy with which the two clocks are phase locked. The maximum value allowed is a time difference between a clock cycle time and a delay time from a retaining register to an output register as discussed later.

A PLL 101 receives CLKA, performs processing and outputs CLKB and two synchronizing signals, SYNCA and SYNCB used in controlling output of data.

The processing involves for example frequency dividing CLKA by A, frequency dividing CLKB by B and regulating the frequency of CLKB so that the divided signals are phase locked. Thus, underlying cycles of A CLKA clock cycles and B CLKB cycles are locked to each other. The two synchronizing signals SYNCA and SYNCB identify the first clock cycle of CLKA and of CLKB in the respective underlying cycles.

One synchronizing signal is generated for each clock domain, in this example, SYNCA for the first clock domain and SYNCB for these second clock domain.

Alternatively, clock signals CLKA and CLKB and synchronization signals SYNCA, SYNCB may be generated also for example by using a common master clock and obtaining CLKA and CLKB by frequency dividing the common master clock by B and A respectively. SYNCA and SYNCB may the indicate every Ath period of CLKA and every Bth period of CLKB respectively. This requires a very high frequency master clock and may therefore often be unpracticable and there may still be skew between CLKA and CLKB due to delays in the dividers or in transmission lines.

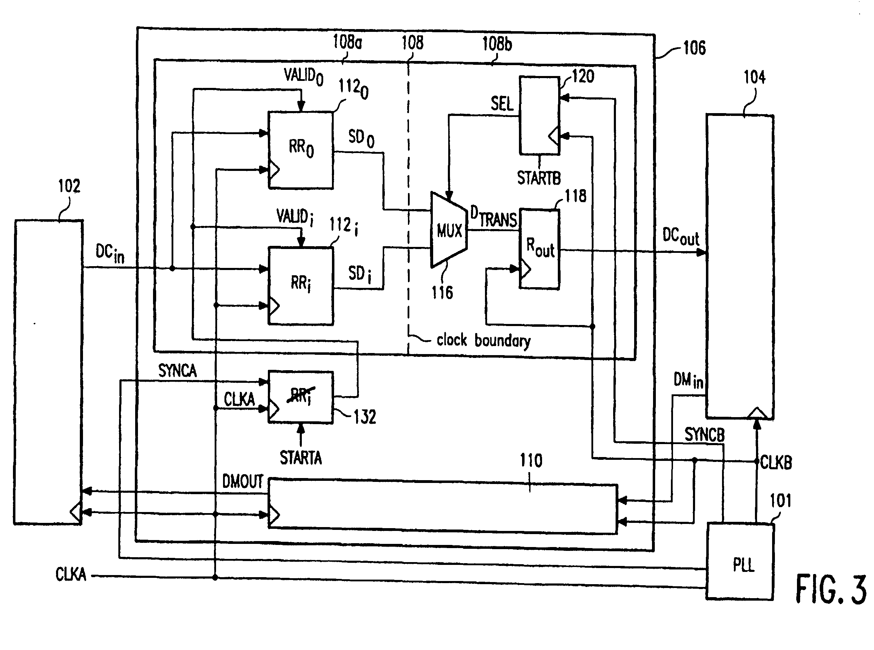

Figure 3 illustrates an example of the interface 106 according to the present invention when the clock ratio is 3:2, i.e., time required for or length of 3 clock cycles of CLKA equals the time required for or length of 2 clock cycles of CLKB. The interface 106 may include interface sections for transferring data from the CPU subsystem 102 to the memory subsystem 104 (CPU/MEM TRANS 108) and from the memory subsystem 104 to the CPU subsystem 102 (MEM/CPU TRANS 110). In the interface 106 of the present invention, a first section 108 transfers data D_{CIN} from the CPU subsystem 102 to the Memory subsystem 104.

Each interface section 108 and 110 includes a first clock domain and a second clock domain. For example, interface section 108 includes, in this example, a first clock domain 108a and a second clock domain 108b. The first clock domain 108a is clocked by the first clock CLKA and receives synchronizing signal SYNCA. Similarly, the second clock domain 108b is clocked by the second clock CLKB and receives synchronizing signal SYNCB. In this example, the first clock domain includes corresponding retaining registers and the second clock domain includes a multiplexer, phase counter register and output register.

More specifically, in the example the first clock domain 108a includes a two retaining registers for receiving data signals. In this example with a 3:2 clock ratio, the number of retaining registers is 2 (RR₀ - RR₁) 112₀ - 112₁.

Each retaining register RR₀ - RR₁ 112₀ - 112₁, in this example, receives the data D_{CIN} from the CPU subsystem 102 and outputs a corresponding selected data signal SDᵢ in response to CLKA and a data valid signal VALIDᵢ. The data valid signal VALIDᵢ indicates whether new valid data has been received through the D_{CIN} signal and should be output or whether previous corresponding selected data signal SDᵢ should be output again. This data valid signal VALIDᵢ is generated based on CLKA and SYNCA. A phase counter 122 is supplied the CLKA and SYNCA signals as well as a STARTA signal. The STARTA signal is a global start signal synchronized to CLKA, indicating the start of a transfer. Successive valid signal VALIDᵢ i=0,1 (and 2, etc. in case there are more registers) are generated in successive clock cycles indicated by CLKA. A respective cycle of successive valid signals VALIDᵢ i=0,1 etc. is started by each SYNCA signal. The data valid signals VALID₀ and VALID₁ are output by the phase counter 132 when a START signal indicates a start of a transfer; otherwise none of the valid signals VALIDᵢ indicates valid data. The phase counter 132 insures a minimal temporal spacing between receiving data in a register and supplying it from that register; in this example, one fast clock period spacing.

The second clock domain 108b includes a multiplexer MUX 116. The MUX 116 selects which selected data signal SD₁ of the received selected data signals, in this example SD₀ - SD₁, to output, based on a select signal SEL. The outputted data signal D_{TRANS} is, in this example, supplied to an output register R_{OUT} 118 which outputs an output signal D_{COUT} to the memory subsystem 104 in response to CLKB. The output register R_{OUT} 118 could be included in the memory subsystem 104 instead of the interface 106.

CLKB is also supplied to a phase counter 120 which may be for example, a phase counter register or phase counter flip-flop which is toggled by CLKB. The phase counter 120 is controlled by the SYNCB sync signal from the PLL 101. The phase counter 120, in this example, receives the second clock signal CLKB and the start signal STARTB, and generates the select signal SEL to indicate which selected data signal SD₀ - SD₁ in this example, should be output by the MUX 116 as the outputted data signal D_{TRANS}.

The phase counter 120 generates successive values of the signal SEL in successive cycles of CLKB. The cycle of successive values is started by the SYNCB signal, i.e. its phase relative to the phase of the VALIDᵢ signals is set by the SYNCB signal.

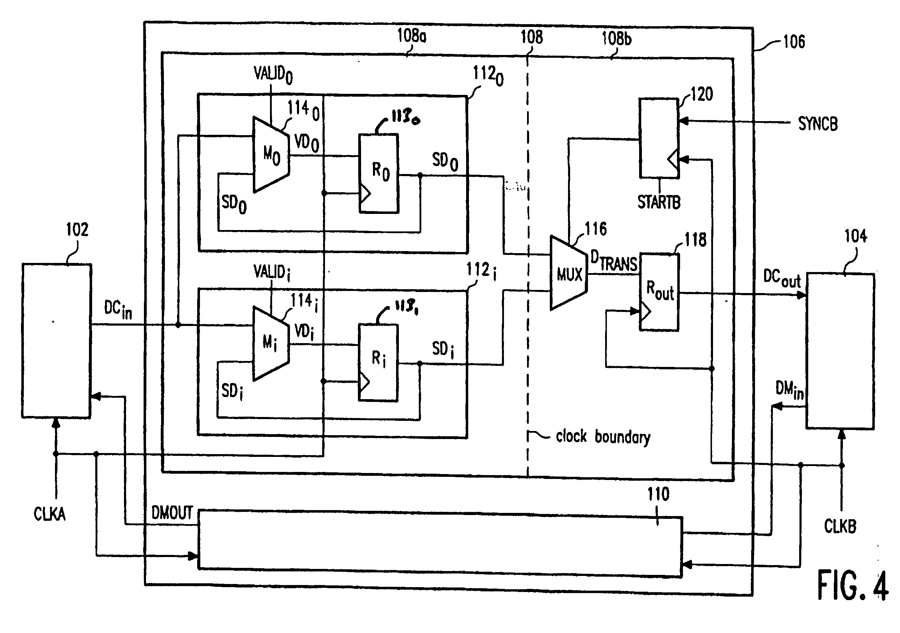

In a preferred embodiment illustrated in Figure 4, each retaining register RR₀ - RR₁ 112₀ - 112₁ includes a respective register R₀ - R₁ 113₀ - 113₁ and a respective multiplexer M₀ - M₁ 114₀ - 114₁. Each multiplexer Mᵢ (I = 0 to 1 in this example) receives the D_{CIN} signal and a corresponding selected data signal SDᵢ and outputs a valid data signal VDᵢ in response to a data valid signal VALIDᵢ.

Each register R₀ - R₁ 113₀ - 113₁, in this example, receives the corresponding valid data signal VDᵢ from the corresponding multiplexer Mᵢ 114ᵢ and outputs the corresponding selected data signal SDᵢ in response to CLKA. The multiplexers M₀-M₁ maintain the contents of the registers R₀ - R₁ 113₀ - 113₁ by recirculating the output of the registers SD₀-SD₁, respectively to their respective input. This function may be achieved by other means such as conditionally stopping the clock for each register.

When the ratio of the frequencies of CLKA and CLKB is A:B, there need to be at most A or B registers, whichever is less. The phase counters 120, 122 may be realized for example using counters, which count the index "i" of the register that must be accessed (written or read). This index "i" signals which VALIDᵢ signal should be active. The counter in the phase counter 122 for the first clock domain 108a increments (i becomes i+1) for every rising edge of CLKA, but is reset to its initial value (i=0) after a clock cycle when SYNCA is active on a rising edge of CLKA. The count value "i" of the counter signals which register should be selected. The counter may be a Johnson counter with outputs that generate the desired VALTDᵢ signals. Counting and output of VALIDᵢ signals is suppressed when no valid data is available as indicated by the STARTA signal.

Similarly the counter in the phase counter 120 for the second clock domain 108b increments for every rising edge of CLKB, but is reset to its initial value after a clock cycle when SYNCB is active on a rising edge of CLKB. In the example, where B=2 this means that the phase counter toggles between 0 and 1.

It must be ensured that there is sufficient delay between writing into a register and reading from that register, even if there is skew between the two clocks. This is realized by ensuring that there is a sufficiently delay between the SYNCA and SYNCB signals and addressing of the register with the lowest number as counted by the counter in the phase counter 120, 132.

To select an appropriate delay, one considers the situation where there is no skew. In this case a first underlying cycle of A cycles of CLKA coincides with a second underlying cycle of B cycles of CLKB. SYNCA and SYNCB indicate for example the first cycle of CLKA and CLKB in the first and second underlying cycle respectively. For any given construction of the phase counter 132 of the first clock domain 108a, it will now be clear in which cycle X of CLKA the first register will be written after the reset of the phase counter by SYNCA. The second phase counter 120 will then be constructed so that the first cycle of CLKB after the reset by SYNCB in which data will be read occurs delayed relative to the cycle X, with a delay that has a duration which is at least as long as a cycle of CLKB.

Thus if there is skew between CLKA and CLKB there will be no problems up to a skew of almost one cycle of CLKA.

It must also be ensured that skew does not cause a register to be written again before it is read. If A > B and data is written only B times per underlying cycle, this can be ensured in a very simple way by using B different registers. If A and B are both large, it may be that fewer registers will suffice and that writing into the registers can be repeated a number of times before a new SYNCA and SYNCB signals are received. In this case the phase counters 120, 132 will repeat the VALID/SEL signals before a new SYNCA and SYNCB signal arrives. The number of registers that is sufficient can easily be determined by trying various numbers and selecting the lowest which ensures that no new write to a register occurs less than one cycle of CLKA before the preceding read.

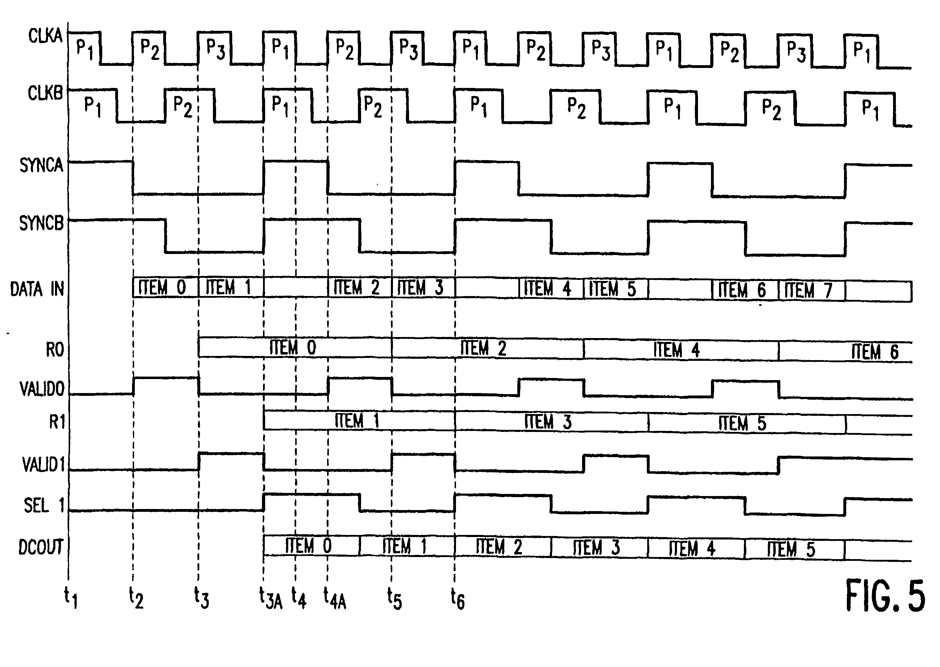

Figure 5 is a timing diagram for the interface section 108 illustrated in Figure 4 which transfers data from the CPU subsystem 102 to the memory subsystem 104. The clock ratio of the system is 3:2, i.e., the length of time (clock length cycle) for 3 clock cycles of CLKA which clocks CPU subsystem 102 is equal to the length of time for 2 clock cycles of CLKB which clocks memory subsystem 104. In this example, the maximum value of the skew is the clock length cycle minus the delay time for a signal to propagate from one of the registers in the retaining register or the retaining register, for example register R₀, to output register R_{OUT} 118. From the timing diagram, the maximum value of the skew would be the time at t₄ - the time at t₃.

The data D_{CIN} being transferred from the CPU subsystem 102 begins to be clocked in at t2, the 2nd pulse of a clock length cycle of CLKA. This data includes items 0-7 in this example. At time t1, both SYNCA and SYNCB are active for a respective clock pulse cycle, in this example, clock pulse cycle A and clock pulse cycle B. At time t2, VALID₀ is active for a clock pulse cycle A, indicating that data presented to M₀ is valid and thus, item 0 of the data D_{CIN} is presented to R₀ 113₀ and registered in register R₀ 113₀ at time t3. The data D_{COUT} is supplied at t3A, the data being based on the SEL signal. In this example, at t3, the SEL signal is low, indicating data from R₀ is to be supplied. Since MUX 116 and R_{OUT} 118 are both clocked by CLKB, the output data, D_{COUT} is supplied in synchronism with clock CLKB.

Items 1-7 are supplied in a similar manner as above, as shown in the timing diagram of Figure 5.

Thus, in this example, item 0 is clocked into the first register R₀ 113₀ at t3 and item 1 is clocked into the second register R₁ 113₁, one CLKA clock cycle later at t3A. After a clock cycle delay, new data is registered in the registers R₀₋₁ 113₀₋₁, i.e., items 2 - 3 are registered in beginning at the third clock cycle (P3 at t5) of a second clock length cycle of CLKA in a similar manner as above. The remaining items are similarly registered.

The data signal D_{CIN} is supplied to the multiplexers M₀₋₁ 114₀₋₁ at each clock cycle. In this example, the valid signal VALID₀ indicates that the data signal is valid for M₀ 114₀ at t2 while the data signal is not valid for the remaining multiplexer M₁ 114₁. The data signal D_{CIN} contains item 0 which, at the following clock cycle P1 at t3 is registered into R₀ 113₀. R₀ 113₀ receives item 0 and holds this value for one entire clock length cycle, in this example, 3 clock cycles of CLKA, i.e., multiplexer M₀ 114₀ will not receive a VALID₀ signal indicating that data signal D_{CIN} is valid for one entire clock length cycle.

Similarly, R₁ 113₁ receives item 1 when signal VALID₁ indicates valid data and the register registers the data from the respective multiplexer M₁ 114₁, holding the respective item for one entire clock length cycle.

The SEL signal supplied by the phase counter 120 indicates to the MUX 116 which selected data signal SDᵢ output by the registers R₀₋₁, is selected for output to the R_{OUT} 118. In this example, when the SEL signal indicates R₀, item 0 is output as D_{COUT} to the memory subsystem 104 based on the CLKB. Since register R_{OUT} 118 is clocked by CLKB, the output signal D_{COUT} is supplied synchronous to CLKB. Accordingly, beginning at t3A or a clock cycle P2 of a CLKB clock length cycle, items 0-7 are output, one every clock cycle.

In the example of figure 5 production of VALIDᵢ signals and valid SEL signals starts in the first clock cycle of CLKA and CLKB after the clock cycle in which SYNCA and SYNCB were asserted respectively. This means that the first write of the write cycle triggered by the SYNCA signal occurs two cycles of CLKA after the start of the underlying cycle of A cycles of CLKA. Similarly the first read of the cycle triggered by SYNCB occurs two cycles of CLKB after the start of the underlying cycle. In the present example, where the ratio of the duration of the clock cycles is 3:2 this means that read occurs one cycle of CLKA after write. The clocks CLKA, CLKB may be skewed by this amount, minus the time to transfer data from the register R₀ to the output Rₒᵤₜ, without causing problems.

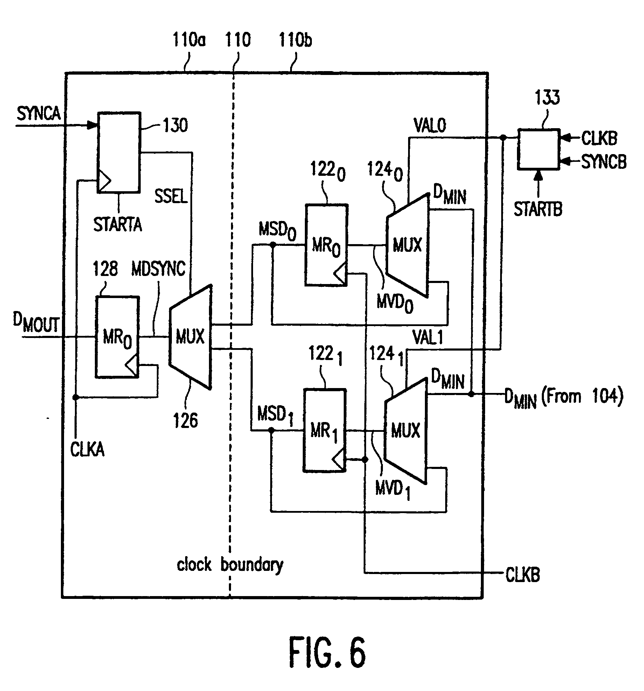

Figure 6 is an embodiment of the MEM/CPU TRANS 110. Similar to the CPU/MEM TRANS 108, MEM/CPU TRANS 110 has a first clock domain 110b and a second clock domain 110a. Additionally, the number of registers is equal to the lesser of A and B, in this example of a 3:2 clock ratio, the number of registers and corresponding multiplexers in the second clock domain 110b is two (MR₀ - MR₁) 122₀ - 122₁.

Each multiplexer MMᵢ (I = 0 to 1 in this example) 124₀ - 124₁ receives the D_{MIN} signal and a corresponding selected data signal MSDᵢ and outputs a valid data signal MVDᵢ in response to a data valid signal VALᵢ. The data valid signal VALᵢ indicates whether new valid data has been received through the D_{MIN} signal and should be output or whether previous valid data MSDᵢ should be output again. The respective VAL signals are supplied from a phase counter 133. The phase counter 133 receives the CLKB signal and the SYNCB signal as well as a STARTB signal which is a global start signal synchronized to CLKB, indicating the start of a transfer. The phase counter 133 insures a minimal temporal spacing, between receiving data in a register and supplying it from that register, in this example, one fast clock period spacing.

Each register MR₀ - MR₁ 122₀ - 122₁, in this example, receives a corresponding valid data signal MVDᵢ from the corresponding multiplexer Mᵢ 124ᵢ and outputs a corresponding selected data signal MSDᵢ in response to CLKB.

The second clock domain 110a includes a multiplexer MMUX 126. The MMUX 126 outputs selects which selected data signal MSDᵢ of the received selected data signals, in this example MSD₀ - MSD₁ to output, based on a select signal SSEL. The outputted data signal MD_{SYNC} is supplied to a register MR_{OUT} 128 which outputs an output signal D_{MOUT} to the CPU subsystem 102 in response to CLKA.

CLKA is also supplied to a phase counter 130 which may be for example, a flip-flop. The phase counter 130 receives the first clock signal CLKA, the start signal STARTA, and the SYNCA signal and generates the select signal SSEL to indicate which selected data signal MSD₀ - MSD₁ in this example, should be output by the MMUX 126 as the outputted data signal MD_{SYNC}.

As can now be readily appreciated, the invention allows data transfer between systems having different clocks while preventing meta stability problems from occurring. The invention may be included in any of the subsystems or may be a separate subsystem. One skilled in the art may easily use active signals instead of inactive signals or vice-versa. Additional modifications may easily be made by one skilled in the art.

All matter contained in the above description or shown in the accompanying drawings shall be interpreted as illustrative and not limiting sense.

## Claims

1. A computer system (100) comprising
- a first subsystem (102) synchronized with a first clock (CLKA),
- a second subsystem (104) synchronized with a second clock (CLKB),
- a read circuit (108b) for reading data clocked by the second clock (CLKB) into the second subsystem,
- a synchronizing circuit (101) for locking first underlying cycles of A cycles of the first clock (CLKA) to second underlying cycles of B cycles of the second clock (CLKB), A and B being integers greater than one and different from one another,
- a plurality of registers (R0, Ri, RR0, RRi),
**characterized in** comprising
- a write circuit (108a) for writing data clocked by the first clock (CLKA) from the first subsystem into the registers,
- the synchronizing circuit (101) producing a first synchronization signal (SYNCA) and a second synchronization signal (SYNCB) indicating clock cycles (P1) of the first and second clock (CLKA, CLKB) with a fixed position where the first and second clocks are synchronized, in the first and second underlying cycles respectively,
- the write and read circuits (108a, 108b) being arranged for accessing the registers in a same sequence, the sequence being triggered in the write and read circuits (108a, 108b) by the first and second synchronization signal respectively, with a first delay of a fixed numbers of cycles of the first clock (CLKA) and a second delay of a fixed number of cycles of the second clock (CLKB) respectively, the first delay and the second delay being so that writing the sequence is at least a duration of one cycle of the first clock ahead of reading the sequence in case the first and second underlying cycles coincide in time.

2. A computer system according to Claim 1, wherein the first and second underlying cycles are cycles of divided signals obtained by dividing the first and second clock signal (CLKA, CLKB) by A and B respectively, the synchronization signals (SYNCA, SYNCB) phase locking the divided signals.

3. A computer system according to Claim 1, wherein the read circuit (108b) comprises a multiplexer (116) receiving output signals (SDO, SDi)from said registers (R0, Ri, RR0, RRi), a selection signal (SEL) for selecting the output signals according to the sequence, the multiplexer (116) outputting one of the output signals as selected by the selection signal (SEL).

4. A computer system according to Claim 1, wherein A is three and B is two, writing into a first register (R0, RR0) of the sequence occurring two periods of the first clock (CLKA) after the opening clock period (P1) of the first cycle, reading from the first register occurring two periods of the second clock (CLKB) after the opening clock period (P1) of the second cycle.

5. A computer system according to Claim 1, wherein the first subsystem is a CPU and the second subsystem is a memory.

## Patentansprüche

1. Computersystem (100), das Folgendes umfasst:
- ein erstes Subsystem (102), das synchronisiert mit einem ersten Takt (CLKA) ist,
- ein zweites Subsystem (102), das synchronisiert mit einem zweiten Takt (CLKB) ist,
- eine Leseschaltung (108b), um von dem zweiten Takt (CLKB) getaktete Daten in das zweite Subsystem einzulesen,
- eine Synchronisierungsschaltung (101), um erste zugrunde liegende Zyklen von A Zyklen des ersten Takts (CLKA) mit zweiten zugrunde liegenden Zyklen von B Zyklen des zweiten Takts (CLKB) zu verriegeln, wobei A und B Ganzzahlen größer als Eins sind und sich voneinander unterscheiden,
**dadurch gekennzeichnet, dass** es Folgendes umfasst:
- mehrere Register (R0, Ri, RR0, RRi),
- Schreibschaltung (108a), um von dem ersten Takt (CLKA) getaktete Daten von dem ersten Subsystem in die Register zu schreiben, wobei die Synchronisierungsschaltung (101) ein erstes Synchronisierungssignal (SYNCA) und ein zweites Synchronisierungssignal (SYNCB) erzeugt, die Taktzyklen (P1) des ersten und des zweiten Takts (CLKA, CLKB) mit einer festen Position in dem ersten bzw. dem zweiten zugrunde liegenden Zyklen angeben, wobei der erste und der zweite Takt synchronisiert sind,
- Schreib- und Leseschaltungen (108a, 108b), die dafür eingerichtet sind, in derselben Sequenz auf die Register zuzugreifen, wobei die Sequenz in den Schreib- und Leseschaltungen (108a, 108b) durch das erste bzw. das zweite Synchronisierungssignal mit einer ersten Verzögerung von einer festen Anzahl von Zyklen des ersten Takts (CLKA) bzw. mit einer zweiten Verzögerung von einer festen Anzahl von Zyklen des zweiten Takts (CLKB) ausgelöst wird und die erste und zweite Verzögerung so beschaffen ist, dass das Schreiben der Sequenz dem Lesen der Sequenz um mindestens die Dauer von einem Zyklus des ersten Taktes vorausgeht, falls der erste und der zweite zugrunde liegende Zyklus zeitlich zusammenfallen.

2. Computersystem nach Anspruch 1, wobei der erste und der zweite zugrunde liegende Zyklus Zyklen dividierter Signale sind, die man erhält, indem man das erste und zweite Taktsignal (CLKA, CLKB) durch A bzw. durch B teilt, wobei die Synchronisierungssignale (SYNCA, SYNCB) die dividierten Signale phasenverriegeln.

3. Computersystem nach Anspruch 1, wobei die Leseschaltung (108b) einen Multiplexer (116), der Ausgabesignale (SD0, SDi) von den genannten Registern (R0, Ri, RR0, RRi) empfängt, sowie ein Auswahlsignal (SEL), um die Ausgabesignale entsprechend der Sequenz auszuwählen, umfasst, und wobei der Multiplexer (116) eines der Ausgabesignale wie vom Auswahlsignal (SEL) ausgewählt ausgibt.

4. Computersystem nach Anspruch 1, bei dem A gleich drei und B gleich zwei ist und zwei Perioden des ersten Takts (CLKA) nach der eröffnenden Taktperiode (P1) des ersten Zyklus in ein erstes Register (R0, RR0) der Sequenz geschrieben wird und zwei Perioden des zweiten Takts (CLKB) nach der eröffnenden Taktperiode (P1) des zweiten Zyklus aus dem ersten Register ausgelesen wird.

5. Computersystem nach Anspruch 1, wobei das erste Subsystem eine CPU und das zweite Subsystem ein Speicher ist.

## Revendications

1. Système informatique (100) comprenant :
- un premier sous-système (102) synchronisé avec une première horloge (CLKA);
- un second sous-système (104) synchronisé avec une seconde horloge (CLKB);
- un circuit de lecture (108b) destiné à extraire par lecture des données cadencées par la seconde horloge (CLKB) dans le second sous-système;
- un circuit de synchronisation (101) destiné à verrouiller des premiers cycles sous-jacents de A cycles de la première horloge (CLKA) avec des seconds cycles sous-jacents de B cycles de la seconde horloge (CLKB), A et B étant des entiers supérieurs à un et différents l'un de l'autre;
- une pluralité de registres (R0, Ri, RR0, RRi),
**caractérisé en ce qu'**il comprend :
- un circuit d'écriture (108a) destiné à écrire des données cadencées par la première horloge (CLKA) provenant du premier sous-système dans les registres;
- le circuit de synchronisation (101) produisant un premier signal de synchronisation (SYNCA) et un second signal de synchronisation (SYNCB) indiquant des cycles d'horloge (P1) de la première et de la seconde horloges (CLKA, CLKB) avec une position fixe, où les première et seconde horloges sont synchronisées respectivement dans les premier et second cycles sous-jacents;
- les circuits d'écriture et de lecture (108a, 108b) étant aptes à accéder aux registres dans une même séquence, la séquence étant déclenchée dans les circuits d'écriture et de lecture (108a, 108b) respectivement par les premier et second signaux de synchronisation, avec respectivement un premier retard égal à un nombre fixe de cycles de la première horloge (CLKA) et un second retard égal à un nombre fixe de cycles de la seconde horloge (CLKB), le premier retard et le second retard étant tels que l'écriture de la séquence présente une avance d'une durée égale à au moins un cycle de la première horloge par rapport à l'extraction par lecture de la séquence dans le cas où les premier et second cycles sous-jacents coïncident dans le temps.

2. Système informatique suivant la revendication 1, dans lequel les premier et second cycles sous-jacents sont des cycles de signaux divisés obtenus en divisant le premier et le second signaux d'horloge (CLKA, CLKB) respectivement par A et B, les signaux de synchronisation (SYNCA, SYNCB) réalisant un verrouillage de phase des signaux divisés.

3. Système informatique suivant la revendication 1, dans lequel le circuit de lecture (108b) comprend un multiplexeur (116) recevant des signaux de sortie (SD0, SDi) desdits registres (R0, Ri, RR0, RRi), un signal de sélection (SEL) destiné à sélectionner les signaux de sortie en fonction de la séquence, le multiplexeur (116) produisant un des signaux de sortie comme sélectionné par le signal de sélection (SEL).

4. Système informatique suivant la revendication 1, dans lequel A est égal à trois et B est égal à deux, l'écriture dans un premier registre (R0, RR0) de la séquence ayant lieu deux périodes de la première horloge (CLKA) après la période d'horloge d'ouverture (P1) du premier cycle, l'extraction par lecture dans le premier registre ayant lieu deux périodes de la seconde horloge (CLKB) après la période d'horloge d'ouverture (P1) du second cycle.

5. Système informatique suivant la revendication 1, dans lequel le premier sous-système est une unité centrale (CPU) et le second sous-système est une mémoire.
